# EUROPEAN PATENT SPECIFICATION

(11) **EP 2 854 102 B1**
(45) Date of publication and mention of the grant of the patent: **06.09.2017**
(21) Application number: 14186122.9
(22) Date of filing: 24.09.2014
(51) Int. Cl.: G06T 5/30, G06T 5/00

(54) **Conservative morphological anti-aliasing**
Konservatives morphologisches Anti-Aliasing
Anticrénelage morphologique conservateur

(30) Priority: 27.09.2013 US 201361883444 P; 16.12.2013 US 201314107226
(43) Date of publication of application: 01.04.2015
(73) Proprietor: Intel Corporation, Santa Clara, CA 95054 (US)
(72) Inventor: Strugar, Filip, Leamington Spa, Warwickshire CV31 3 ND (GB)
(74) Representative: Goddar, Heinz J.

(56) References cited:
- US-A1- 2012 176 367
- US-B1- 6 608 942
- ALEXANDER RESHETOV ET AL: "Morphological antialiasing", PROCEEDINGS OF THE 1ST ACM CONFERENCE ON HIGH PERFORMANCE GRAPHICS, HPG '09, 1 January 2009 (2009-01-01), page 109, XP055160164, New York, New York, USA DOI: 10.1145/1572769.1572787 ISBN: 978-1-60-558603-8
- JORGE JIMENEZ ET AL: "Filtering approaches for real-time anti-aliasing", ACM SIGGRAPH 2011 COURSES ON, SIGGRAPH '11, 1 January 2011 (2011-01-01), pages 1-329, XP055160174, New York, New York, USA DOI: 10.1145/2037636.2037642 ISBN: 978-1-45-030967-7

## Description

### Background

This relates generally to graphics processing.

Graphics processing attempts to compensate for the presence of so called jaggies along otherwise straight edges using anti-aliasing. One type of anti-aliasing, which takes multiple samples, is called multi-sampled anti-aliasing (MSAA).

In an example where two samples are taken per pixel, called 2xMSAA, specialized hardware and performance deficiencies can be addressed using image-based post-processing anti-aliasing. Compared to MSAA, post-process anti-aliasing techniques are easier to implement and work in scenarios where MSAA does not work, such as deferred lighting and other non-geometry based aliasing.

But existing post-process anti-aliasing techniques lack adequate sub-pixel accuracies and are less temporally stable. They also cause perceptible blurring to textures and texts, since it is difficult for edge detection algorithms to distinguish between intentional color discontinuities and unwanted aliasing caused by imperfect rendering.

A morphological anti-aliasing approach is disclosed in A. Reshetov et al.: "Morphological Anti-Aliasing" Proceedings of the 1st ACM Conference on High Performance Graphics, HPG '09, 2009, which discloses an approach for creating plausibly anti-aliased images by looking for patterns in an original image and then blending colors in the neighborhood of these patterns.

The invention is defined by a method, an apparatus and a machine-readable storage including machine-readable instructions as defined in the independent claims. Preferred embodiments are defined in the dependent claims.

### Brief Description Of The Drawings

Some embodiments are described with respect to the following figures:
Figure 1 is a depiction of a kernel, according to one embodiment;
Figure 2 is a depiction of a two edge shape, according to one embodiment;
Figure 3 is a depiction of a three edge shape, according to one embodiment;
Figure 4 is a depiction of a four edge shape, according to one embodiment;
Figure 5 is a depiction of a Z-shape, according to one embodiment;
Figure 6 is a sketch showing the analysis of a Z-shape, according to one embodiment;
Figure 7 is a depiction of a triangle being rasterized with no anti-aliasing, showing the Z-shapes along one edge;
Figure 8 is a depiction of that triangle shown in Figure 7 showing the Z-shapes, as well as two edge and three edge shapes that may be detected;
Figure 9 shows the results of directional blurring or color transfer, according to one embodiment;
Figure 10 shows the use of color transfer to reconstruct an edge close to what an anti-aliased rasterization would produce, according to one embodiment;
Figure 11 is a flow chart for one embodiment;
Figure 12 is a system depiction for one embodiment;
Figure 13 is a front elevational view of one embodiment; and
Figure 14 is a depiction of a CMAA unit in one embodiment.

### Detailed Description

Morphological anti-aliasing estimates pixel coverage of the original geometry. It finds edges by looking for color discontinuities and classifies them according to a series of pre-defined pattern shapes to calculate coverage areas for pixels. These areas are then used to blend with a neighbor.

Conservative Morphological Anti-Aliasing (CMAA) achieves the following advantages in some embodiments:
1) may run efficiently on low-medium range graphics processing unit (GPU) hardware such as integrated GPU/central processing units, while providing a quality anti-aliasing solution; and
2) may be minimally invasive so that it can be used in worst case scenarios such as text, repeating patterns and certain geometries (power lines, mesh fences, foliage) and moving images.

To achieve higher performance, CMAA handles two fairly simple scenarios: a complex symmetrical long edge shape type, called a Z-shape herein, and three simple (3x3 pixel kernel) shapes, called 2 edge, 3 edge and 4 edge shapes herein.

To achieve good quality with minimal blurring, all shape types are selected conservatively (for example, narrow, one pixel thickness lines are intentionally left mostly unmodified) and color transfer is mostly symmetrical.

To avoid blurring small shapes (such as text), to increase effective edge detection range (which is based on a threshold setting) and to prevent local shape search interference from less noticeable edges, a 'locally dominant edge' detection algorithm may be used.

CMAA includes four basic logical steps in one embodiment:
1) image analysis for color discontinuities (afterwards stored in a local compressed 'edge' buffer);
2) extracting locally dominant edges with a kernel;
3) handling of simple 2, 3 and 4 edge shapes; and
4) handling of a symmetrical long edge or Z-shape.

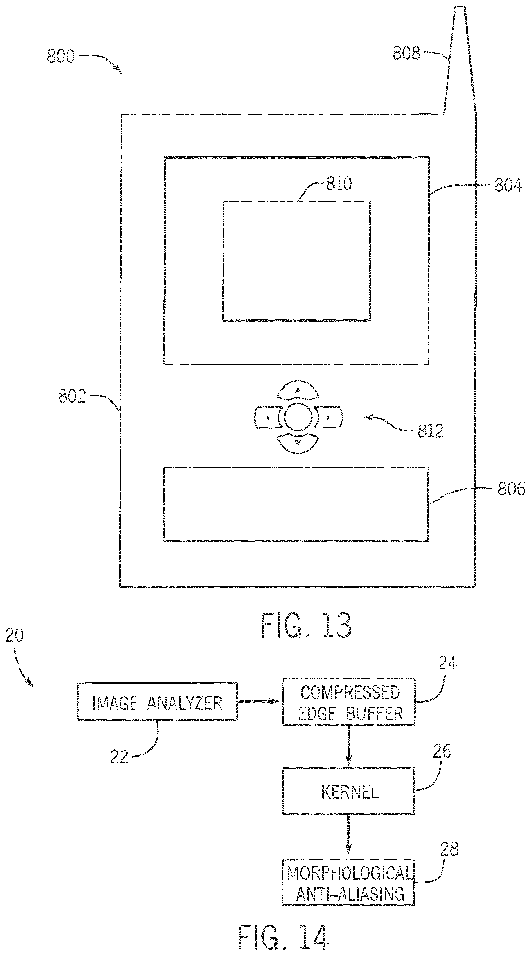

In accordance with one embodiment, CMAA unit 20, shown in Figure 14, includes an image analyzer 22 that stores color discontinuities in a compressed edge buffer 24. A kernel 26 receives the discontinuities from the buffer and extracts locally dominate edges. Then morphological anti-aliasing device 28 locates and handles the 2, 3, and 4 edge shapes as well as the Z-shape. It also performs color transfer. In some embodiments, the CMAA unit may be part of a graphics processor.

In image analysis for color discontinuities (edges) (step 1 above), edge detection may be performed by comparing neighboring colors. Neighboring colors may be compared, in one embodiment, using:
- sum of per-channel Luma-weighted color difference in sRGB color space;
- luminance value calculated from the input in sRGB color space; and/or
- weighted Euclidean distance.

An edge (discontinuity) exists if the difference between the neighboring pixel values is above a preset threshold, which may be determined empirically, in one embodiment.

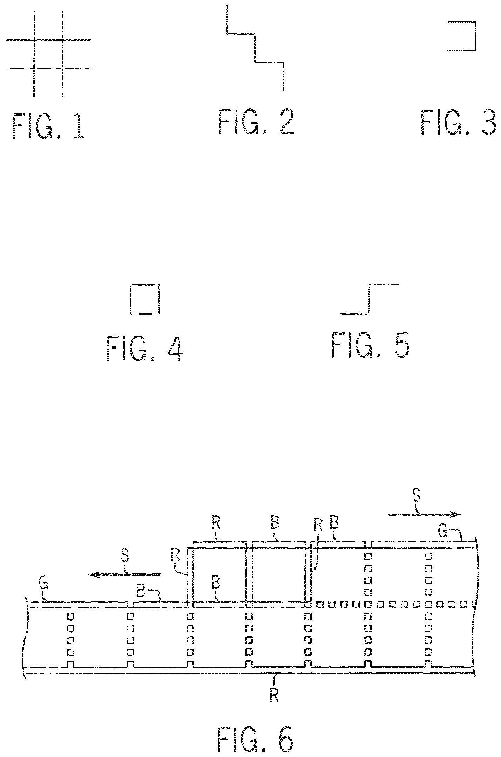

The image analysis adapts for the tendency of the human visual system to mask low contrast edges surrounded by higher contrasts. A kernel in the shape of the double plus sign, shown in Figure 1, is used in one embodiment.

In locally dominant edges extraction (step 2, above), for each detected edge, a color delta value (dEc) above the empirically determined threshold is compared to that of the neighboring 12 edges (dEn) of the double plus shaped kernel (Figure 1). The color values are not compared directly in one embodiment. Instead, 4-bit above threshold grades from the previous pass are used. The previous pass compares colors between all neighboring pixels and outputs a 4-bit grade for comparison. The 4-bit grade may be 0 if the value is below the threshold and [1, 15] for the amount above the threshold, using linear mapping from a color difference being equal to the threshold to the maximum color difference.

The edge remains an edge if its dEc > lerp(average(dEn), max(dEn), IdeFactor), where IdeFactor is empirically chosen (defaulting to 0.35 in one embodiment).

The resulting smaller local adaptation kernel size is somewhat less efficient at increasing effective edge detection range. However, it is more effective at preventing blurring of small shapes (such as text), reducing local shape interference from less noticeable edges, avoiding some of the pitfalls of large kernels (visible kernel-sized transition from un-blurred to blurry) and has better performance, in some embodiments.

Edges detected in step 1, and refined in step 2, are used to make assumptions in step 3, handling of simple 2, 3, or 4 edge shapes, about the shape of the underlying edge before rasterization (virtual shape). For simple shape handling, all pixels are analyzed for existence of 2, 3, 4, or Z-shape edge aliasing shapes. The two edge shape is shown in Figure 2, the three edge shape is shown in Figure 3, the four edge shape is shown in Figure 4, and the Z-shape is shown in Figure 5.

Color transfer is applied in steps 3 and 4 to match the virtual shape color coverage and achieve local anti-aliasing effect. Color transfer involves modifying the base pixel in the center of the aliasing shape using a linear interpolation between the base pixel and a source or neighboring pixel or pixels. While this color transfer is not always symmetrical, the amount of shape distortion is minimized to sub-pixel size in one embodiment.

Handling of symmetrical long edge or Z-shapes (step 4, above), first involves analyzing each edge-bearing pixel for a potential Z-shape, representing the center of the virtual shape rasterization pixel step (which is mostly a triangle edge). The criterion used, in one embodiment, for this detection is illustrated in Figure 6. Four Z-shape orientations (with 90° difference) are handled. The Z-shape, for a set of two neighboring pixels, is defined by the existence or absence of edges (i.e. color discontinuities). The Z-shape condition is met if silhouette edges B, in Figure 6, are present (color discontinuity exists) and, at the same time, the non-silhouette edges R are not present (there is no color discontinuity). Furthermore, the length of the Z-shape is determined by tracing the edges G, on both sides (indicated by arrows S), away from the center of the Z-shape, stopping when either edge G is not present or a vertical edge (not shown) is encountered.

For each detected Z-shape, the length of the edge to the left and right is determined by tracing the horizontal (for two horizontal Z-shapes) edges G on both sides, and stopping if none are present on either side, or a vertical edge is encountered.

The edge length from the previous step is used to reconstruct the location of the virtual shape edge and apply color transfer (to the both sides of the Z-shape) to match coverage that it would have at each pixel. This step overrides any anti-aliasing done in step 3 on the same pixels.

The inherent symmetry of this approach better preserves overall image average color and shape, ignores borderline cases and better preserves original shapes, while also being more temporally stable as small one pixel (or few pixels) changes do not induce drastic color transfer and shape modification, in some embodiments.

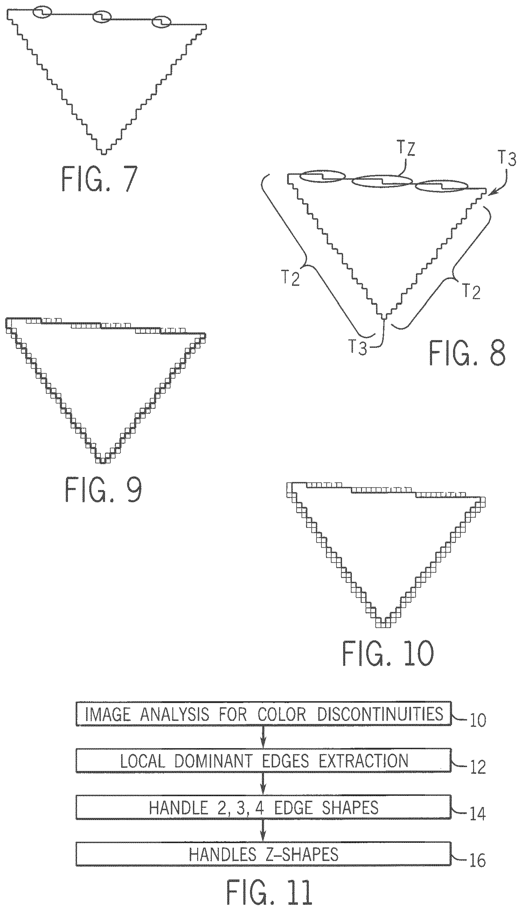

Referring to Figure 7, the centers of the rasterization steps that are the focus of Z-shape detection are circled for a triangle being rasterized with no anti-aliasing. Figure 8 shows the detected Z-shapes T_{z} that are detected. The remaining detected shapes are mostly two edge shapes T₂ and three edge shapes T₃.

Figures 9 and 10 show the results of color transfer (directional blurring) used to reconstruct an image similar to what anti-aliased rasterization would produce.

A sequence for conservative morphological anti-aliasing, shown in Figure 11, may be implemented in software, firmware and/or hardware. In software and firmware embodiments, it may be implemented by computed executed instructions stored in one or more non-transitory computer readable media. The non-transitory computer readable media may be an optical, magnetic, or semiconductor storage, for example. The instructions may be executed by one or more processors.

The sequence shown in Figure 11 begins, in block 10, with image analysis for color discontinuities. The color discontinuities may be stored in a local compressed edge buffer, which may be associated with a processor executing the sequence of Figure 11, in one embodiment. Then, locally dominant edges are extracted, as indicated at block 12. In one embodiment, a color change threshold may be used and threshold grades may be applied. The threshold grade may scale for how much the discontinuity is above the threshold. Then the edge is retained, depending on how its threshold difference compares to an average threshold difference.

Next, simple shapes, including 2, 3, and 4 edge shapes, and Z-shapes, may be detected, as indicated in blocks 14 and 16. Color transfer is then applied to match the virtual shade color coverage and to achieve a local anti-aliasing effect by modifying a base pixel in the center of the particular shape using a linear interpolation between the base pixel and one or more surrounding pixels. In the case of Z-shapes, the Z-shape, for a set of two neighboring pixels, is defined by the existence or absence of edges. Then, for each detected Z-shape, the length of the edge on the left and the right is determined by tracing the horizontal edges on both sides and stopping if none are present on either side or a vertical edge is encountered. Then the edge length from the previous step is used to reconstruct the location of the virtual shape edge and apply color transfer to match coverage it would have had at each pixel.

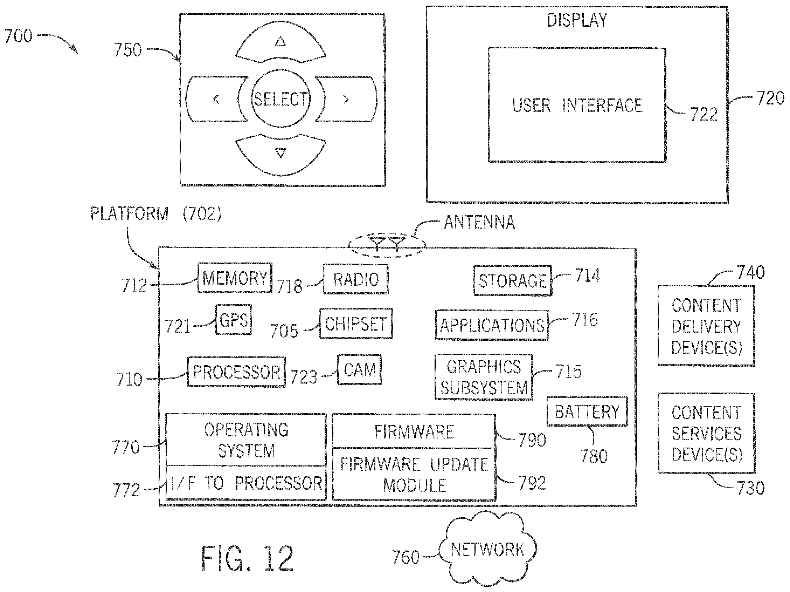

Figure 12 illustrates an embodiment of a system 700. In embodiments, system 700 may be a media system although system 700 is not limited to this context. For example, system 700 may be incorporated into a personal computer (PC), laptop computer, ultra-laptop computer, tablet, touch pad, portable computer, handheld computer, palmtop computer, personal digital assistant (PDA), cellular telephone, combination cellular telephone/PDA, television, smart device (e.g., smart phone, smart tablet or smart television), mobile internet device (MID), messaging device, data communication device, and so forth.

In embodiments, system 700 comprises a platform 702 coupled to a display 720. Platform 702 may receive content from a content device such as content services device(s) 730 or content delivery device(s) 740 or other similar content sources. A navigation controller 750 comprising one or more navigation features may be used to interact with, for example, platform 702 and/or display 720. Each of these components is described in more detail below.

In embodiments, platform 702 may comprise any combination of a chipset 705, processor 710, memory 712, storage 714, graphics subsystem 715, applications 716 and/or radio 718. Chipset 705 may provide intercommunication among processor 710, memory 712, storage 714, graphics subsystem 715, applications 716 and/or radio 718. For example, chipset 705 may include a storage adapter (not depicted) capable of providing intercommunication with storage 714.

Processor 710 may be implemented as Complex Instruction Set Computer (CISC) or Reduced Instruction Set Computer (RISC) processors, x86 instruction set compatible processors, multi-core, or any other microprocessor or central processing unit (CPU). In embodiments, processor 710 may comprise dual- core processor(s), dual-core mobile processor(s), and so forth. The processor may implement the sequence of Figure 11 together with memory 712.

Memory 712 may be implemented as a volatile memory device such as, but not limited to, a Random Access Memory (RAM), Dynamic Random Access Memory (DRAM), or Static RAM (SRAM).

Storage 714 may be implemented as a non-volatile storage device such as, but not limited to, a magnetic disk drive, optical disk drive, tape drive, an internal storage device, an attached storage device, flash memory, battery backed-up SDRAM (synchronous DRAM), and/or a network accessible storage device. In embodiments, storage 714 may comprise technology to increase the storage performance enhanced protection for valuable digital media when multiple hard drives are included, for example.

Graphics subsystem 715 may perform processing of images such as still or video for display. Graphics subsystem 715 may be a graphics processing unit (GPU) or a visual processing unit (VPU), for example. An analog or digital interface may be used to communicatively couple graphics subsystem 715 and display 720. For example, the interface may be any of a High-Definition Multimedia Interface, DisplayPort, wireless HDMI, and/or wireless HD compliant techniques. Graphics subsystem 715 could be integrated into processor 710 or chipset 705. Graphics subsystem 715 could be a stand-alone card communicatively coupled to chipset 705.

The graphics and/or video processing techniques described herein may be implemented in various hardware architectures. For example, graphics and/or video functionality may be integrated within a chipset. Alternatively, a discrete graphics and/or video processor may be used. As still another embodiment, the graphics and/or video functions may be implemented by a general purpose processor, including a multi-core processor. In a further embodiment, the functions may be implemented in a consumer electronics device.

Radio 718 may include one or more radios capable of transmitting and receiving signals using various suitable wireless communications techniques. Such techniques may involve communications across one or more wireless networks. Exemplary wireless networks include (but are not limited to) wireless local area networks (WLANs), wireless personal area networks (WPANs), wireless metropolitan area network (WMANs), cellular networks, and satellite networks. In communicating across such networks, radio 718 may operate in accordance with one or more applicable standards in any version.

In embodiments, display 720 may comprise any television type monitor or display. Display 720 may comprise, for example, a computer display screen, touch screen display, video monitor, television-like device, and/or a television. Display 720 may be digital and/or analog. In embodiments, display 720 may be a holographic display. Also, display 720 may be a transparent surface that may receive a visual projection. Such projections may convey various forms of information, images, and/or objects. For example, such projections may be a visual overlay for a mobile augmented reality (MAR) application. Under the control of one or more software applications 716, platform 702 may display user interface 722 on display 720.

In embodiments, content services device(s) 730 may be hosted by any national, international and/or independent service and thus accessible to platform 702 via the Internet, for example. Content services device(s) 730 may be coupled to platform 702 and/or to display 720. Platform 702 and/or content services device(s) 730 may be coupled to a network 760 to communicate (e.g., send and/or receive) media information to and from network 760. Content delivery device(s) 740 also may be coupled to platform 702 and/or to display 720.

In embodiments, content services device(s) 730 may comprise a cable television box, personal computer, network, telephone, Internet enabled devices or appliance capable of delivering digital information and/or content, and any other similar device capable of unidirectionally or bidirectionally communicating content between content providers and platform 702 and/display 720, via network 760 or directly. It will be appreciated that the content may be communicated unidirectionally and/or bidirectionally to and from any one of the components in system 700 and a content provider via network 760. Examples of content may include any media information including, for example, video, music, medical and gaming information, and so forth.

Content services device(s) 730 receives content such as cable television programming including media information, digital information, and/or other content. Examples of content providers may include any cable or satellite television or radio or Internet content providers. The provided examples are not meant to limit embodiments of the invention.

In embodiments, platform 702 may receive control signals from navigation controller 750 having one or more navigation features. The navigation features of controller 750 may be used to interact with user interface 722, for example. In embodiments, navigation controller 750 may be a pointing device that may be a computer hardware component (specifically human interface device) that allows a user to input spatial (e.g., continuous and multi-dimensional) data into a computer. Many systems such as graphical user interfaces (GUI), and televisions and monitors allow the user to control and provide data to the computer or television using physical gestures, facial expressions, or sounds.

Movements of the navigation features of controller 750 may be echoed on a display (e.g., display 720) by movements of a pointer, cursor, focus ring, or other visual indicators displayed on the display. For example, under the control of software applications 716, the navigation features located on navigation controller 750 may be mapped to virtual navigation features displayed on user interface 722, for example. In embodiments, controller 750 may not be a separate component but integrated into platform 702 and/or display 720. Embodiments, however, are not limited to the elements or in the context shown or described herein.

In embodiments, drivers (not shown) may comprise technology to enable users to instantly turn on and off platform 702 like a television with the touch of a button after initial boot-up, when enabled, for example. Program logic may allow platform 702 to stream content to media adaptors or other content services device(s) 730 or content delivery device(s) 740 when the platform is turned "off." In addition, chip set 705 may comprise hardware and/or software support for 5.1 surround sound audio and/or high definition 7.1 surround sound audio, for example. Drivers may include a graphics driver for integrated graphics platforms. In embodiments, the graphics driver may comprise a peripheral component interconnect (PCI) Express graphics card.

In various embodiments, any one or more of the components shown in system 700 may be integrated. For example, platform 702 and content services device(s) 730 may be integrated, or platform 702 and content delivery device(s) 740 may be integrated, or platform 702, content services device(s) 730, and content delivery device(s) 740 may be integrated, for example. In various embodiments, platform 702 and display 720 may be an integrated unit. Display 720 and content service device(s) 730 may be integrated, or display 720 and content delivery device(s) 740 may be integrated, for example. These examples are not meant to limit the invention.

In various embodiments, system 700 may be implemented as a wireless system, a wired system, or a combination of both. When implemented as a wireless system, system 700 may include components and interfaces suitable for communicating over a wireless shared media, such as one or more antennas, transmitters, receivers, transceivers, amplifiers, filters, control logic, and so forth. An example of wireless shared media may include portions of a wireless spectrum, such as the RF spectrum and so forth. When implemented as a wired system, system 700 may include components and interfaces suitable for communicating over wired communications media, such as input/output (I/O) adapters, physical connectors to connect the I/O adapter with a corresponding wired communications medium, a network interface card (NIC), disc controller, video controller, audio controller, and so forth. Examples of wired communications media may include a wire, cable, metal leads, printed circuit board (PCB), backplane, switch fabric, semiconductor material, twisted-pair wire, co-axial cable, fiber optics, and so forth.

Platform 702 may establish one or more logical or physical channels to communicate information. The information may include media information and control information. Media information may refer to any data representing content meant for a user. Examples of content may include, for example, data from a voice conversation, videoconference, streaming video, electronic mail ("email") message, voice mail message, alphanumeric symbols, graphics, image, video, text and so forth. Data from a voice conversation may be, for example, speech information, silence periods, background noise, comfort noise, tones and so forth. Control information may refer to any data representing commands, instructions or control words meant for an automated system. For example, control information may be used to route media information through a system, or instruct a node to process the media information in a predetermined manner. The embodiments, however, are not limited to the elements or in the context shown or described in Figure 12.

As described above, system 700 may be embodied in varying physical styles or form factors. Figure 13 illustrates embodiments of a small form factor device 800 in which system 700 may be embodied. In embodiments, for example, device 800 may be implemented as a mobile computing device having wireless capabilities. A mobile computing device may refer to any device having a processing system and a mobile power source or supply, such as one or more batteries, for example.

As described above, examples of a mobile computing device may include a personal computer (PC), laptop computer, ultra-laptop computer, tablet, touch pad, portable computer, handheld computer, palmtop computer, personal digital assistant (PDA), cellular telephone, combination cellular telephone/PDA, television, smart device (e.g., smart phone, smart tablet or smart television), mobile internet device (MID), messaging device, data communication device, and so forth.

Examples of a mobile computing device also may include computers that are arranged to be worn by a person, such as a wrist computer, finger computer, ring computer, eyeglass computer, belt-clip computer, arm-band computer, shoe computers, clothing computers, and other wearable computers. In embodiments, for example, a mobile computing device may be implemented as a smart phone capable of executing computer applications, as well as voice communications and/or data communications. Although some embodiments may be described with a mobile computing device implemented as a smart phone by way of example, it may be appreciated that other embodiments may be implemented using other wireless mobile computing devices as well. The embodiments are not limited in this context.

The processor 710 may communicate with a camera 722 and a global positioning system sensor 720, in some embodiments. A memory 712, coupled to the processor 710, may store computer readable instructions for implementing the sequences shown in Figure 2 in software and/or firmware embodiments.

As shown in Figure 13, device 800 may comprise a housing 802, a display 804, an input/output (I/O) device 806, and an antenna 808. Device 800 also may comprise navigation features 812. Display 804 may comprise any suitable display unit for displaying information appropriate for a mobile computing device. I/O device 806 may comprise any suitable I/O device for entering information into a mobile computing device. Examples for I/O device 806 may include an alphanumeric keyboard, a numeric keypad, a touch pad, input keys, buttons, switches, rocker switches, microphones, speakers, voice recognition device and software, and so forth. Information also may be entered into device 800 by way of microphone. Such information may be digitized by a voice recognition device. The embodiments are not limited in this context.

The following clauses and/or examples pertain to further embodiments:
One example embodiment may be a method comprising performing anti-aliasing by identifying a symmetrical long edge shape and performing color transfer on said edge shape. The method may also include detecting a locally dominant edge. The method may also include using a double plus sign shaped kernel. The method may also include detecting a locally dominant edge based on a comparison of its color delta value above an empirically determined threshold to that of 12 neighboring edges making up said kernel. The method may also include providing 4-bit grades to indicate an amount above said threshold. The method may also include using linear mapping from a color difference being equal to the threshold to a maximum color difference. The method may also include extracting the edge based on its color delta value. The method may also include identifying each of two edge, three edge and four edge shapes. The method may also include applying color transfer to match the shape color coverage by modifying a base pixel in the center of the shape using linear interpolation between the base pixel and at least one neighboring pixel. The method may also include detecting the long symmetrical edge based on the existence or absence of edges. The method may also include wherein said detecting includes identifying a long symmetrical edge if silhouette edges are present and non-silhouette edges are absent.

Another example embodiment may be one or more non-transitory computer readable media storing instructions executed by a processor to perform a sequence comprising performing anti-aliasing by identifying a symmetrical long edge shape and performing color transfer on said edge shape. The media may further store said sequence including detecting a locally dominant edge. The media may further store said sequence including using a double plus sign shaped kernel. The media may further store said sequence including detecting a locally dominant edge based on a comparison of its color delta value above an empirically determined threshold to that of 12 neighboring edges making up said kernel. The media may further store said sequence including providing 4-bit grades to indicate an amount above said threshold. The media may further store said sequence including using linear mapping from a color difference being equal to the threshold to a maximum color difference. The media may further store said sequence including extracting the edge based on its color delta value. The media may further store said sequence including identifying each of two edge, three edge and four edge shapes. The media may further store said sequence including applying color transfer to match the shape color coverage by modifying a base pixel in the center of the shape using linear interpolation between the base pixel and at least one neighboring pixel. The media may further store said sequence including detecting the long symmetrical edge based on the existence or absence of edges. The media may further store said sequence including wherein said detecting includes identifying a long symmetrical edge if silhouette edges are present and non-silhouette edges are absent.

In another example embodiment may be an apparatus comprising a processor to perform anti-aliasing by identifying a symmetrical long edge shape and performing color transfer on said edge shape, and a memory coupled to said processor. The apparatus may include said processor to detect a locally dominant edge. The apparatus may include said processor to use a double plus sign shaped kernel. The apparatus may include said processor to detect a locally dominant edge based on a comparison of its color delta value above an empirically determined threshold to that of 12 neighboring edges making up said kernel. The apparatus may include said processor to provide 4-bit grades to indicate an amount above said threshold. The apparatus may include an operating system, a battery, and firmware and a module to update said firmware.

The graphics processing techniques described herein may be implemented in various hardware architectures. For example, graphics functionality may be integrated within a chipset. Alternatively, a discrete graphics processor may be used. As still another embodiment, the graphics functions may be implemented by a general purpose processor, including a multicore processor.

References throughout this specification to "one embodiment" or "an embodiment" mean that a particular feature, structure, or characteristic described in connection with the embodiment is included in at least one implementation encompassed within the present disclosure. Thus, appearances of the phrase "one embodiment" or "in an embodiment" are not necessarily referring to the same embodiment. Furthermore, the particular features, structures, or characteristics may be instituted in other suitable forms other than the particular embodiment illustrated and all such forms may be encompassed within the claims of the present application.

While a limited number of embodiments have been described, those skilled in the art will appreciate numerous modifications and variations therefrom. It is intended that the invention is defined by the independent claims.

## Claims

1. A computer-implemented method for anti-aliasing comprising:
detecting (12) locally dominant edges;
identifying (16) a symmetrical long Z-shape edge by detecting the presence of silhouette edges (B) of a Z-shape, if a color discontinuity exists between two neighboring pixels, and absence of non-silhouette edges (R) of the Z-shape, if there is no color discontinuity between two neighboring pixels, and tracing the edges (G) on both sides away from the center of the Z-shape to determine the length of the Z-shape edge on each side;
using the edge length to reconstruct the location of a virtual shape edge of said symmetrical Z-shape; and
performing color transfer to both sides of said edge shape to match the virtual shape color coverage at each pixel and achieve a local anti-aliasing effect.

2. The method of claim 1 including using a 3x3 pixel kernel.

3. The method of claim 2 including detecting a locally dominant edge based on a comparison of its color delta value above an empirically determined threshold to that of 12 neighboring edges making up said 3x3 pixel kernel.

4. The method of claim 3 including providing 4-bit grades to indicate an amount above said threshold.

5. The method of claim 4 including using linear mapping from a color difference being equal to the threshold to a maximum color difference.

6. The method of one of claims 1 to 5 including applying color transfer to match the shape color coverage by modifying a base pixel in the center of the shape using linear interpolation between the base pixel and at least one neighboring pixel.

7. An apparatus comprising:
a processor configured to perform a method for anti-aliasing, the method comprising:
detecting locally dominant edges;
identifying a symmetrical long Z-shape edge by detecting the presence of silhouette edges (B) of a Z-shape if a color discontinuity exists between two neighboring pixels, and absence of non-silhouette edges (R) of the Z-shape if there is no color discontinuity between two neighboring pixels and tracing the edges (G) on both sides away from the center of the Z-shape to determine the length of the Z-shape edge on each side;
using the edge length to reconstruct the location of a virtual shape edge of said symmetrical Z-shape; and
performing color transfer to both sides of said edge shape to match the virtual shape color coverage at each pixel and achieve a local anti-aliasing effect; and a memory coupled to said processor.

8. The apparatus of claim 7, said processor to use a 3x3 pixel kernel.

9. Machine-readable storage including machine-readable instructions, when executed, to implement a method as claimed in any one of the claims 1 to 6.

## Patentansprüche

1. Computerimplementiertes Verfahren für Anti-Aliasing, das Folgendes umfasst:
Detektieren (12) örtlich dominanter Kanten;
Identifizieren (16) einer symmetrischen langen Z-Formkante durch Detektieren des Vorhandenseins von Silhouettenkanten (B) einer Z-Form, falls eine Farbdiskontinuität zwischen zwei benachbarten Pixeln vorhanden ist, und des Fehlens von Nicht-Silhouettenkanten (R) der Z-Form, falls es keine Farbdiskontinuität zwischen zwei benachbarten Pixeln gibt, und Nachverfolgen der Kanten (G) auf beiden Seiten weg von der Mitte der Z-Form, um die Länge der Z-Formkante auf jeder Seite zu bestimmen;
Verwenden der Kantenlänge, um die Stelle einer virtuellen Formkante der symmetrischen Z-Form wiederherzustellen; und
Durchführen der Farbübertragung auf beide Seiten der Kantenform, um zu der Farbdeckung der virtuellen Form an jedem Pixel zu passen und einen örtlichen Anti-Aliasing-Effekt zu erreichen.

2. Verfahren nach Anspruch 1, das Verwenden eines 3 x 3 Pixelkernels aufweisend.

3. Verfahren nach Anspruch 2, das Detektieren einer örtlich dominanten Kante auf der Grundlage eines Vergleichs ihres Farb-Deltawertes über einem empirisch festgelegten Schwellenwert mit dem von 12 benachbarten Kanten, welche 3 x 3 Pixelkernel ausmachen, aufweisend.

4. Verfahren nach Anspruch 3, das Bereitstellen von 4-Bit-Qualitäten aufweisend, um einen Betrag über dem Schwellenwert anzuzeigen.

5. Verfahren nach Anspruch 4, das Verwenden linearer Abbildung von einer Farbdifferenz, die gleich dem Schwellenwert ist, zu einer maximalen Farbdifferenz aufweisend.

6. Verfahren nach einem der Ansprüche 1 bis 5, das Anwenden der Farbübertragung aufweisend, um zu der Farbdeckung der Form zu passen, durch Modifizieren eines Basispixels in der Mitte der Form unter Verwendung linearer Interpolation zwischen dem Basispixel und mindestens einem benachbarten Pixel.

7. Vorrichtung, die Folgendes umfasst:
einen Prozessor, der dazu ausgestaltet ist, ein Verfahren für Anti-Aliasing durchzuführen, wobei das Verfahren Folgendes umfasst:
Detektieren örtlich dominanter Kanten;
Identifizieren einer symmetrischen langen Z-Formkante durch Detektieren des Vorhandenseins von Silhouettenkanten (B) einer Z-Form, falls eine Farbdiskontinuität zwischen zwei benachbarten Pixeln vorhanden ist, und des Fehlens von Nicht-Silhouettenkanten (R) der Z-Form, falls es keine Farbdiskontinuität zwischen zwei benachbarten Pixeln gibt, und Nachverfolgen der Kanten (G) auf beiden Seiten weg von der Mitte der Z-Form, um die Länge der Z-Formkante auf jeder Seite zu bestimmen;
Verwenden der Kantenlänge, um die Stelle einer virtuellen Formkante der symmetrischen Z-Form wiederherzustellen; und
Durchführen der Farbübertragung auf beide Seiten der Kantenform, um zu der Farbdeckung der virtuellen Form an jedem Pixel zu passen und einen örtlichen Anti-Aliasing-Effekt zu erreichen; und
einen mit dem Prozessor gekoppelten Speicher.

8. Vorrichtung nach Anspruch 7, wobei der Prozessor einen 3 x 3 Pixelkernel verwenden soll.

9. Maschinenlesbare Speicherung maschinenlesbare Anweisungen aufweisend, die, wenn sie ausgeführt werden, ein Verfahren nach irgendeinem der Ansprüche 1 bis 6 implementieren.

## Revendications

1. Procédé d'anticrénelage mis en oeuvre par ordinateur consistant :
à détecter (12) localement des bords dominants ;
à identifier (16) un bord en forme de long Z symétrique en détectant la présence de bords de silhouette (B) ayant une forme de Z si une discontinuité de couleur existe entre deux pixels voisins, et l'absence de bords sans silhouette (R) ayant la forme de Z s'il n'y a pas de discontinuité de couleur entre deux pixels voisins, et à tracer les bords (G) sur les deux côtés à distance du centre de la forme de Z pour déterminer la longueur du bord en forme de Z sur chaque côté ;
à utiliser la longueur du bord pour reconstruire l'emplacement d'un bord de forme virtuelle de ladite forme de Z symétrique ; et
effectuer un transfert de couleur sur les deux côtés de ladite forme de bord pour faire correspondre la couverture de couleur de forme virtuelle au niveau de chaque pixel et à obtenir un effet d'anticrénelage local.

2. Procédé selon la revendication 1, consistant à utiliser un noyau de 3 × 3 pixels.

3. Procédé selon la revendication 2, consistant à détecter un bord localement dominant en se basant sur une comparaison de sa valeur de delta de couleur supérieure à un seuil déterminé de façon empirique à celle de 12 bords voisins constituant le noyau de 3 × 3 pixels.

4. Procédé selon la revendication 3, consistant à fournir des grades de 4 bits pour indiquer une quantité supérieure audit seuil.

5. Procédé selon la revendication 4, consistant à utiliser un mappage linéaire à partir d'une différence de couleur qui est égale au seuil, avec une différence de couleur maximale.

6. Procédé selon l'une quelconque des revendications 1 à 5, consistant à appliquer un transfert de couleur pour faire correspondre la couverture de couleur de forme en modifiant un pixel de base au centre de la forme à l'aide d'une interpolation linéaire entre le pixel de base et au moins un pixel voisin.

7. Appareil comprenant :
un processeur configuré pour réaliser un procédé d'anticrénelage, le procédé consistant :
à détecter localement des bords dominants ;
à identifier un bord en forme de long Z symétrique en détectant la présence de bords de silhouette (B) ayant une forme de Z si une discontinuité de couleur existe entre deux pixels voisins, et l'absence de bords sans silhouette (R) ayant la forme de Z s'il n'y a pas de discontinuité de couleur entre deux pixels voisins, et à tracer les bords (G) sur les deux côtés à distance du centre de la forme de Z pour déterminer la longueur du bord en forme de Z sur chaque côté ;
à utiliser la longueur du bord pour reconstruire l'emplacement d'un bord de forme virtuelle de ladite forme de Z symétrique ; et effectuer un transfert de couleur sur les deux côtés de ladite forme de bord pour faire correspondre la couverture de couleur de forme virtuelle au niveau de chaque pixel et à
obtenir un effet d'anticrénelage local ; et une mémoire couplée audit processeur.

8. Appareil selon la revendication 7, ledit processeur étant destiné à utiliser un noyau de 3 × 3 pixels.

9. Stockage lisible par une machine comportant des instructions lisibles par une machine destinées, lorsqu'elles sont exécutées, à mettre en oeuvre un procédé selon l'une quelconque des revendications 1 à 6.
